# EUROPEAN PATENT SPECIFICATION

(11) **EP 0 195 946 B1**
(45) Date of publication and mention of the grant of the patent: **08.12.1993**
(21) Application number: 86102473.5
(22) Date of filing: 26.02.1986
(51) Int. Cl.: C08G 65/00

(54) **Bifunctional and monofunctional perfluoropolyethers having brominated end groups and a controlled molecular weight**
Bifunktionelle und monofunktionelle Perfluorpolyäther mit bromierten Endgruppen und kontrolliertem Molekulargewicht
Perfluoropolyéthers monofonctionnels et bifonctionnels ayant des groupes terminaux bromés et ayant un poids moléculaire déterminé

(30) Priority: 26.02.1985 IT 1965385; 16.10.1985 IT 2251785
(43) Date of publication of application: 01.10.1986
(73) Proprietor: AUSIMONT S.p.A., I-20100 Milano (IT)
(72) Inventor: Marchionni, Giuseppe, I-20133 Milan (IT); Viola, Gian Tommaso, I-48015 Cervia Ravenna (IT)
(74) Representative: Zumstein, Fritz, Dr.

(56) References cited:
- EP-A- 0 062 325
- EP-A- 0 089 820
- EP-A- 0 151 877
- FR-A- 1 585 601
- FR-A- 2 008 652

## Description

This invention relates to new perfluoropolyethers having a Br atom bound to one or both the end groups of the chain.

More in particular this invention relates to new mono- or bifunctional perfluoropolyethers having a controlled molecular weight and consisting of units chosen from amongst (C₂F₄O), (CF₂O), (C₃F₆O) and 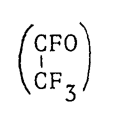
statistically distributed along the perfluoropolyether chain.

A further object of the present invention is that of providing a process for preparing the abovesaid perfluoropolyethers with brominated end groups and having a controlled molecular weight by a method which is easily practicable on a commercial scale and is capable of providing high yields of brominated product.

It is known that the reaction of oxygen with tetrafluoroethylene and/or perfluoropropene, carried out at a low temperature in the presence of UV radiations and in an inert solution, generally a fully fluorinated compound or a chlorofluorinated compound, leads to a perfluoroether product having a peroxide oxygen content which varies as a function of the operative conditions under which the photooxidation has been effected.

The process and the peroxidic products are disclosed for example in GB-A-1,226,566 and 1,104,482.

The thermal decomposition of the peroxide which is carried out in order to remove peroxide bridges, leads to high molecular weight perfluoropolyethers containing neutral end groups of the type -CF₃, -CF₂CF₃ and acylic end groups of the type -OCF₂COF.

Actually, the thermal decomposition reaction of the peroxide product for providing the neutral perfluoropolyether gives rise to radicals of the type R_{f}O.CF₂ (Rf being a perfluoroether chain) which react with one another, thus leading always to perfluoropolyethers having a high and non-controlled molecular weight.

Generally, in order to obtain low molecular weight perfluoropolyethers , the thermal decomposition of the peroxidized perfluoroether product is accomplished in the presence of chain end groups.

The resulting perfluoropolyethers are not completely neutral and may contain small fractions with end groups deriving from the chain end group employed.

Furthermore, by operating in this manner, it is not possible to correctly control the molecular weight of the perfluoropolyethers free from peroxide bridges.

The decomposition of the peroxidized precursors is usually carried out by means of a heat treatment carried out in a wide temperature range, generally from about 100°C up to high temperatures, preferably from 180 to 250°C.

EP-A-151 877 discloses perfluoropropylene ether homopolymers and copolymers with one moiety -CF₂-CF₂-O-, which are end-capped with the group -CFBr-CF₃. EP-A-62 325 discloses similar products. EP-A-89 820 discloses perfluoropolyethers of the same structure as those of the present invention, but which do not contain bromine in the end-capping groups. These polymers may contain bromine in the main chain.

It has now surprisingly been found that it is possible to prepare further mono- or bifunctional perfluoropolyethers with brominated end groups and a controlled molecular weight and with high yields if the treatment of the peroxidized precursor, having a proper peroxide oxygen content as a function of the desired molecular weight of the final product, is conducted under suitable conditions.

Accordingly, the present invention is directed to perfluoropolyethers of general formula: 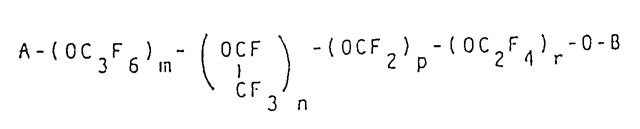
wherein m, n, r and p are integers from 0 to 50, m+n+r+p being at least 2, and wherein A and B, equal or different between them, are end groups chosen from amongst:
-CF₂X, -CF₂CF₂X, 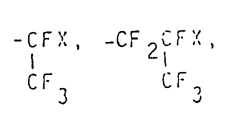
-COF,-CF₂COF, 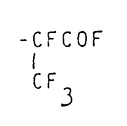
wherein X is fluorine or bromine, and at least one of the groups A and B contains a bromine atom, the perfluorooxyalkylene units being distributed randomly along the perfluoropolyether chain, provided that said perfluoropolyethers are obtainable by a process comprising the steps of
a) the photochemical oxidation of C₂F₄ and/or C₃F₆ and
b) subsequent photolysis of the product of step a) with UV radiation in the presence of bromine at a temperature ranging from -40°C to 130°C, the bromine being at such concentrations as to saturate the liquid reaction medium.

The process for preparing the perfluoropolyethers defined above comprises the steps of
a) the photochemical oxidation of C₂F₄ and/or C₃F₆ and
b) subsequent photolysis of the product of step a) with UV radiation in the presence of bromine at a temperature ranging from -40°C to 130°C, the bromine being at such concentrations as to saturate the liquid reaction medium.

According to this process a peroxidized perfluoropolyether, obtained from the photooxidation of tetrafluoroethylene and/or perfluoropropene and having a predeterminated peroxide oxygen content is subjected to a photolysis with UV radiation in liquid phase under the above conditions in the presence or absence of a completely fluorinated or chlorofluorinated inert solvent, the liquid reaction medium being fully saturated with bromine.

The product resulting from the photooxidation which contains peroxide bridges, can be utilized as such if the peroxide oxygen content is already at the value suitable for obtaining the desired molecular weight of the final brominated perfluoropolyether.

Should the peroxidized precursor have a higher peroxide oxygen content than desired, then it is subjected to thermal treatments according to conventional techniques such as the ones described in the above-mentioned British patent.

The term peroxide oxygen content (P.O.) means the amount in grams of activated oxygen referred to 100 grams of perfluoropolyether.

The average molecular weight of the brominated perfluoropolyether is directly related to the peroxide oxygen content of the starting perfluoropolyether.

In fact, in correspondence with the peroxidic bridges, during the bromination according to the invention occurs a cleavage of the perfluoropolyether chain: consequently the reduction of the average molecular weight is proportional to the peroxidic bridges in the chain.

The solvent utilized in the bromination reaction is any fully fluorinated or, as an alternative, chlorofluorinated compound which is inert under the reaction conditions and does not contain unsaturations.

As solvents, useful to the purpose of the invention there may be cited, for example, the perfluorocarbons or the fluorocarbons.

To prepare a bromine-saturated solution, it is generally operated having the bromine present as a bottom body in the reaction apparatus.

The preferred reaction temperature is in the range of 60 to 120°C, more preferably from 90 to 110° C.

In fact, by operating under the above-cited conditions it is possible to obtain very high yields of brominated perfluoropolyethers; therefore it could be assumed that the radicals formed by the peroxide decomposition, completely react with bromine, providing only end groups of the type -CF₂Br or

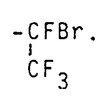

If there is only one peroxidic bridge in the starting perfluoropolyether chain, the obtained products will be prevailingly formed by monobrominated compounds. If there are many peroxidic bridges in the starting perfluoropolyether chain, the obtained products will be prevailingly formed by dibrominated compounds.

If it is operated at higher temperatures than 130°C, the perfluoropolyethers according to the invention are still obtained, however, they contain only very low percentages of brominated, in particular of dibrominated perfluoropolyethers.

By the process of the present invention it is possible to prepare both perfluorobrominated compounds with a higher molecular weight and perfluorobrominated compounds with a lower molecular weight, depending on the peroxide oxygen content of the starting precursor, or by acting on the temperature at which the photolysis of the initial peroxide is carried out.

In fact, the higher molecular weights are obtainable by operating at temperatures from -40 to 80°C, while lower molecular weight brominated perfluoropolyethers are obtainable at a temperature range of 80 to 130°C.

It has been found that by a simple heat treatment in the absence of UV radiation it is not possible to obtain perfluoropolyethers with a controlled molecular weight depending on the peroxide content of the starting perfluoropolyether.

The process indicated hereinbefore permits to overcome all the abovesaid drawbacks. In fact, the new brominated perfluoropolyethers of the invention are obtained by an utmostly simplified process with very high yields and with a molecular weight regulated as a function of the peroxide content of the starting peroxidized perfluoropolyether.

The following examples are given to illustrate the present invention.

### Example 1

Into a cylindrical photochemical reactor having a maximum capacity of 300 ml, with an optical path of 0,5 cm, equipped with a coaxial quartz sheath for housing a mercury vapour lamp type Hanau TQ 150 or a noble gas discharge lamp, for example a Xenon lamp type PEK INC. X-75, equipped with a magnetic stirrer, a reflux dropping device, a CO₂ trap and a thermoregulation system for both the reactor and the sheath system, there were introduced 430 g of perfluoropolyether obtained from tetrafluoroethylene having a peroxidic oxygen (P.O.) content of 1.04% by weight, a viscosity of 95cm²/s (9500 cSt) (at 20°c) , an average molecular weight of 39930 and a m/n ratio, determined by NMR (¹⁹F) analysis, equal to 0.8. 5 ml of bromine were added, the whole was mixed and the temperature was brought to about 100°C. Subsequently, after switching on the lamp, 20 ml of bromine were added during the test which lasted 14 hours. At the conclusion of the test, the reaction mass was discharged into a flask and bromine was distilled under vacuum.

Obtained were 390 g of a product having a viscosity of 0.2 cm²/s (20 cSt) being practically free from P.O. and having an average molecular weight (PM) of 3550, such product exhibiting, on NMR (¹⁹F) analysis, the following structure:

BrF₂C-O(C₂F₄O)ₘ(CF₂O)ₙ-CF₂Br

with a m/n ratio = 0.8, analogous with the one of the starting product.

The chemical shifts of the brominated end groups (δ, ppm; CFCl₃) were, respectively:

| | |
|---|---|
| -OCF₂OCF₂Br | -19.9 ppm |
| -OCF₂CF₂OCF₂Br | -18.4 ppm |

The product yield in brominated products was equal to 96% with respect to 4% of neutral product of formula:

RO-(C₂F₄O)ₙ-(CF₂O)-R'

where R und R', equal or different from each other, may be -CF₃ and -CF₂CF₃.

### Example 2

Into the photochemical reactor of example 1 there were introduced 125.3 g of fluoropolyether obtained from tetrafluoroethylene having a P.O. of 1.04% by weight and a viscosity of 95 cm²/s (9500 cSt), along with 280 g of the throughly fluorinated solvent 1,2-perfluorodimethyl cyclobutane.

After mixing of the mass, 2 ml of bromine were added and the temperature was brought to 0°C.

Subsequently, after switching on the lamp, further 6 ml of bromine were added during the test which lasted 20 hours.

At the conclusion of the test, the reaction mass was discharged into a flask and the bromine as well as the solvent were distilled under vacuum.

Obtained were 109 g of product having a viscosity of 0.32 cm²/s (32cSt) and being practically free from P.O., having a PM of 4630, such product exhibiting, on NMR (¹⁹F) analysis, the same structure as the dibrominated product of example 1.

### Example 3 (Comparative Example)

Into a 200 cm³ flask equipped with a stirrer, a thermometer, a cooler and a dropping device, 100 g of perfluoropolyether obtained from tetrafluoroethylene, having a P.O. equal to 1.2% by weight, a viscosity of 53 cm²/s (5300 cSt) and a PM of 31300 were introduced. The reactor temperature was brought to 150°C and 8 ml of bromine were added at regular intervals during 5 hours: subsequently the temperature was brought to 210°C and the mixture was refluxed during additional 5 hours. At the end of the test, bromine was removed under vacuum, so obtaining 79 g of a product having a viscosity of 0.17 cm²/s (17 cSt) and a PM of 4300 which, on NMR (¹⁹F) analysis, revealed to have practically the same structure as the dibrominated product abtained in example 1, but with a yield equal to 5% with respect to 95% of completely fluorinatd neutral product.

### Example 4 (Comparative Example)

120 g of perfluoropolyether of example 3 obtained from tetrafluoroethylene, having a P.O. equal to 1,2% by weight, were introduced into the flask of example 3. The reactor temperature was brought to 150°C and 8 ml of Br₂ were added during the 5-hour test; subsequently the temperature was raised to 180°C and the whole was allowed to react during additional 5 hours. At the conclusion of the test, bromine was removed under vacuum and 93 g of a product having a viscosity of 0.21 cm²/s (21 cSt) were obtained; such product, subjected to NMR (¹⁹F) analysis, proved to have practically the same structure as the dibrominated product obtained in example 1, but with a yield equal to 4.5% with respect to 95.5% of completely fluorinated neutral product.

### Example 5

420 g of perfluoropolyether obtained from tetrafluoroethylene with a P.O. of 1.5% by weight, a viscosity of 144 cm²/s (14400 cSt) and a molecular weight of 46200 were introduced into a photochemical reactor similar to the one described in example 1.

After switching on the lamp and maintaining a temperature of 100°C, 25 ml of bromine were added during 18 hours. At the conclusion of the test there were obtained 345 g of a product having a viscosity of 0.07 cm²/s (7 cSt) and a PM of 2600 with a yield of dibrominated product equal to 96.5% besides 3.5% of neutral product.

### Example 6

Under the same conditions as in example 5 and using the same perfluoropolyether, but at a temperature of 60°C, there were obtained 350 g of a product having a viscosity of 0.45cm²/s (45 cSt) and an average molecular weight of 5250.

The % amount of dibrominated product was higher than 85%.

### Example 7

Under the same conditions and using the same perfluoropolyether as in example 5, but operating at a temperature of 120°C, there were obtained 330 g of a perfluoropolyether with a viscosity of 0.10 cm²/s (10 cSt) and a molecular weight of 3000; in this case the dibrominated product amount was equal to 74%.

### Example 8

A peroxide perfluoropolyether obtained by photochemical oxidation of tetrafluoroethylene, having a mean molecular weight of 24500 and a peroxide content equal to 0.9% by weight, was reduced by means of a thermal treatment at a temperature of 160°C during 5 hours till obtaining a product having an average molecular weight of 18000 and a peroxide oxygen content equal to 0.35% by weight.

400 g of such product were placed into a photochemical reactor similar to the one described in example 1 and were irradiated in the presence of Br₂ (7 ml) during 10 hours at a temperature of 100°C.

After removal of Br₂ under vacuum, there were obtained 380 g of a product having a viscosity of 0.65 cm²/s (65 cSt) and a content of products with brominated functionalities equal to 95% by weight.

### Example 9

Into the photochemical reactor of example 1 there were introduced 400 g of perfluorpolyether obtained from C₃F₆, having a peroxidic oxygen content (P.O.) of 0.7% by weight and a molecular weight of 2550 (osmometric measure).

Subsequently 10 g bromine were added and the temperature was raised to 100°C. After switching on the lamp further bromine was added during the test (20 g during 15 hours). At the end of the test, the reaction mass was discharged into a flask and residual bromine was distilled under vacuum.

The obtained product (395 g) showed an average molecular weight of 1220, was practically free from P.O. and contained brominated end groups -CF₂Br and 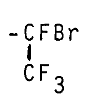
in amount equal to a brominated end group for each perfluoropolyether chain, the other end group being of the type:
-OCF₃,

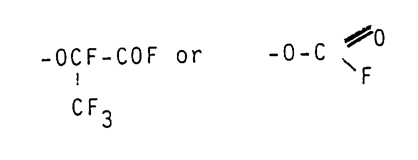

### Example 10

Into a photochemical reactor having a capacity of 1000 ml and an optical path of 2 cm equipped with coaxial quartz sheaths for housing a mercury vapour lamp type Marian TQ 150 with traps and a thermoregulation system suitable for maintaining the temperature at -40°C, were introduced 1000 g of perfluoropropene. After switching on the lamp, the reactor was fed with a mixture of O₂ + C₂F₄ in an amount of 192 l/h (measured at atmospheric pressure). After 150 minutes the lamp was switched off and 380 g of perfluoropolyether having a P.O. equal to 3.23 % and a viscosity of 10.64 cm²/s (1064 cSt) (20°C) were obtained.

From the NMR analysis it came out that the structure consisted of C₃F₆O units randomly alternated with CF₂CF₂O and CF₂O units and of peroxidic units.

The reduction of the peroxidic oxygen content was obtained by subjecting the product to the irradiation with a UV lamp in the reactor used in example 1 and maintaining the temperature at 0°C.

After 18 hours, the P.O. content was 1.1 % and the molecular weight of the product was 2780.

In the same reactor the bromination reaction was carried out at 100°C by introducing 10 g bromine at the beginning and then further 40 g during the following 30 hours. Peroxidic oxygen was completely eliminated.

After removal of excess bromine, 340 g of perfluoropolyether were obtained with an average molecular weight of 1050, having brominated end groups 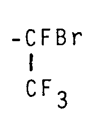
and -CF₂Br, neutral end groups of the type -OCF₃ and acid end groups of the type 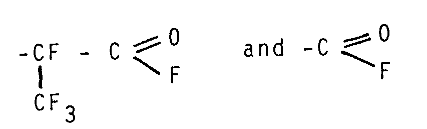
The functionality of the product, expressed as ratio between brominated end groups and number of perfluoropolyether chains is 1.3.

## Claims

1. Perfluoropolyethers of general formula: 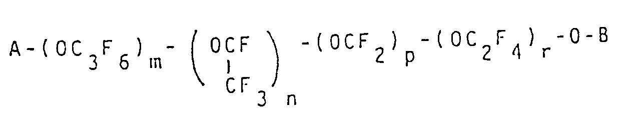 wherein m n, r and p are integers from 0 to 50, m+n+r+p being at least 2, and wherein A and B, equal or different between them, are end groups chosen from amongst:
-CF₂X, -CF₂CF₂X, 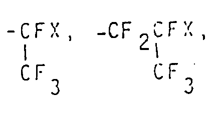 -COF, -CF₂COF, 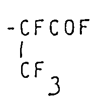 wherein X is fluorine or bromine, and at least one of the groups A and B contains a bromine atom, the perfluorooxyalkylene units being distributed randomly along the perfluoropolyether chain, provided that said perfluoropolyethers are obtainable by a process comprising the steps of
a) the photochemical oxidation of C₂F₄ and/or C₃F₆ and
b) subsequent photolysis of the product of step a) with UV radiation in the presence of bromine at a temperature ranging from -40°C to 130°C, the bromine being at such concentrations as to saturate the liquid reaction medium.

2. A process for preparing the perfluoropolyethers according to claim 1 comprising the steps of
a) the photochemical oxidation of C₂F₄ and/or C₃F₆ and
b) subsequent photolysis of the product of step a) with UV radiation in the presence of bromine at a temperature ranging from -40°C to 130°C, the bromine being at such concentrations as to saturate the liquid reaction medium.

3. The process according to claim 2, in which the treatment with bromine is carried out at a temperature from 90 to 110°C.

4. The process according to claim 2, in which the treatment with bromine is carried out at a temperature from 0 to 80°C.

5. The process according to claim 2, characterized in that the product of step a) is subjected to a thermal treatment in order to reduce the peroxide oxygen content.

6. The process according to claim 2, characterized in that the UV radiation photolysis of the oxidation product of C₂F₄ and/or C₃F₆ with bromine is accomplished in the presence of fully fluorinated inert solvents.

## Patentansprüche

1. Perfluoropolyether der allgemeinen Formel 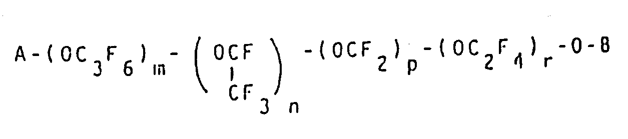 worin m, n, r und p ganze Zahlen von 0 bis 50 sind, wobei m+n+r+p zumindest 2 betragen, und worin A und B, gleich oder voneinander verschieden, Endgruppen sind, ausgewählt unter:
-CF₂X,-CF₂CF₂X, 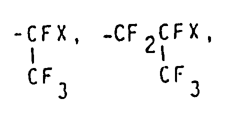 -COF,-CF₂COF, 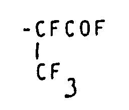 worin X für Fluor oder Brom steht, und zumindest eine der Gruppen A und B ein Bromatom enthält, wobei die Perfluorooxyalkylen-Einheiten statistisch entlang der Perfluoropolyether-Kette verteilt sind, mit der Maßgabe, daß die Perfluoropolyether durch ein Verfahren erhältlich sind, welches die folgenden Stufen umfaßt
a) die photochemische Oxidation von C₂F₄ und/oder C₃F₆ und
b) die anschließende Photolyse des Produkts der Stufe a) mit UV-Strahlung in Gegenwart von Brom bei einer Temperatur im Bereich von -40 bis 130°C, wobei das Brom in derartigen Konzentrationen vorliegt, daß das flüssige Reaktions medium gesättigt wird.

2. Verfahren zur Herstellung von Perfluoropolyethern gemäß Anspruch 1, umfassend die folgenden Stufen
a) die photochemische Oxidation von C₂F₄ und/oder C₃F₆ und
b) die anschließende Photolyse des Produkts der Stufe a) mit UV-Strahlung in Gegenwart von Brom bei einer Temperatur im Bereich von -40 bis 130°C, wobei das Brom in derartigen Konzentrationen vorliegt, daß das flüssige Reaktionsmedium gesättigt wird.

3. Verfahren gemäß Anspruch 2, worin die Behandlung mit Brom bei einer Temperatur von 90 bis 110°C durchgeführt wird.

4. Verfahren gemäß Anspruch 2, worin die Behandlung mit Brom bei einer Temperatur von 0 bis 80°C durchgeführt wird.

5. Verfahren gemäß Anspruch 2, dadurch gekennzeichnet, daß das Produkt der Stufe a) einer thermischen Behandlung unterzogen wird, um den Peroxidsauerstoffgehalt zu reduzieren.

6. Verfahren gemäß Anspruch 2, dadurch gekennzeichnet, daß die UV-Strahlungs-Photolyse des Oxidationsprodukts von C₂F₄ und/oder C₃F₆ mit Brom in Gegenwart vollständig fluorierter inerter Lösungsmittel durchgeführt wird.

## Revendications

1. Perfluoropolyéthers de formule générale: 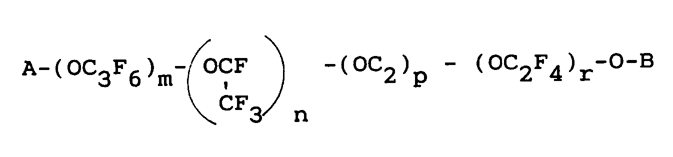 dans laquelle:
m, n, r et p sont des nombres entiers de 0 à 50;
m + n + r + p étant au moins égal à 2; et dans laquelle:
A et B, identiques ou différents l'un de l'autre, sont des groupes terminaux choisis parmi:
-CF₂X, -CF₂CF₂X, 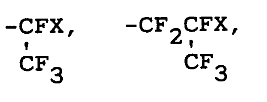 -COF, -CF₂COF, 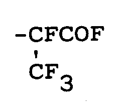 dans lesquels:
X représente un atome de fluor ou de brome
et au moins l'un des groupes A et B contient un atome de brome, les motifs perfluoro-oxyalkylène étant distribués de façon aléatoire le long de la chaîne perfluoropolyéther, à condition que ces perfluoropolyéthers soient obtenus par un procédé comprenant les étapes suivantes:
(a) l'oxydation photochimique de C₂F₄ et/ou C₃F₆, et
(b) la photolyse ultérieure du produit de l'étape a) par une radiation UV en présence de brome, à une température comprise entre -40°C et 130°C, le brome étant utilisé à des concentrations telles qu'elles saturent le milieu réactionnel liquide.

2. Un procédé de préparation des perfluoropolyéthers selon la revendication 1, comprenant les étapes suivantes:
(a) l'oxydation photochimique de C₂F₄ et/ou C₃F₆, et
(b) la photolyse ultérieure du produit de l'étape a) par une radiation UV en présence de brome, à une température de -40°C à 130°C, le brome étant à des concentrations telles qu'elles saturent le milieu réactionnel liquide.

3. Le procédé selon la revendication 2, caractérisé en ce que le traitement au brome est mis en oeuvre à une température comprise entre 90 et 110°C.

4. Le procédé selon la revendication 2, caractérisé en ce que le traitement au brome est mis en oeuvre à une température comprise entre 0 et 80°C.

5. Le procédé selon la revendication 2, caractérisé en ce que le produit de l'étape a) est soumis à un traitement thermique en vue de réduire la teneur en péroxyde d'oxygène.

6. Le procédé selon la revendication 2, caractérisé en ce que la photolyse par radiation UV du produit de l'oxydation de C₂F₄ et/ou C₃F₆ avec le brome est réalisée en présence de solvants inertes totalement fluorés.
